# FASCICULE DE BREVET EUROPEEN

(11) **EP 3 693 653 B1**
(45) Date de publication et mention de la délivrance du brevet: **15.12.2021**
(21) Numéro de dépôt: 20152778.5
(22) Date de dépôt: 21.01.2020
(51) Int. Cl.: F17C 13/04

(54) **DISPOSITIF DE FOURNITURE DE FLUIDE SOUS PRESSION ET ENSEMBLE DE STOCKAGE(S) DE FLUIDE SOUS PRESSION COMPRENANT UN TEL DISPOSITIF**
LIEFERVORRICHTUNG FÜR EIN UNTER DRUCK STEHENDES FLUID, UND SPEICHEREINHEIT FÜR UNTER DRUCK STEHENDES FLUID, DIE EINE SOLCHE VORRICHTUNG UMFASST
DEVICE FOR SUPPLYING FLUID UNDER PRESSURE AND ASSEMBLY FOR STORING PRESSURISED FLUID INCLUDING SUCH A DEVICE

(30) Priorité: 11.02.2019 FR 1901331
(43) Date de publication de la demande: 12.08.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LIGONESCHE, Renaud, 78350 LES LOGES-EN-JOSAS (FR); FRENAL, Antoine, 78350 LES LOGES-EN-JOSAS (FR); FISCHER, Benjamin, 78350 LES LOGES-EN-JOSAS (FR)
(74) Mandataire: Air Liquide

(56) Documents cités:
- FR-A1- 2 892 799
- FR-A1- 2 991 750
- FR-A1- 3 033 388
- FR-A1- 3 056 278

## Description

L'invention concerne un dispositif de fourniture de fluide sous pression ainsi qu'un ensemble de stockage(s) de fluide sous pression comprenant un tel dispositif.

FR 3 056 278 A1 divulgue un tel dispositif.

L'invention concerne plus particulièrement un dispositif de fourniture de fluide sous pression, notamment de gaz sous pression, comprenant un premier robinet abritant un circuit interne de fluide, le dispositif comportant un second robinet comprenant un circuit interne, le second robinet formant une entité physique distincte du premier robinet, le premier robinet et le second robinet comprenant des organes d'accrochages respectifs formant un système de connexion rapide mâle/femelle amovible du second robinet sur le premier robinet, les circuits internes comprenant un ensemble de vanne(s) pour autoriser ou empêcher la circulation du fluide vers une sortie du dispositif lorsque le second robinet est accroché sur le premier robinet via le système de connexion rapide, le dispositif comprenant au moins un organe de commande mobile actionnable manuellement pour commander l'ensemble de vanne(s), l'organe de commande étant mobile entre une première position de repos dans laquelle la circulation de fluide vers la sortie est empêchée et une seconde position active dans laquelle la circulation de fluide vers la sortie est autorisée, le système de connexion rapide comprenant une pièce de connexion du second robinet sur le premier robinet, la pièce de connexion étant mobile entre une première position lorsque la connexion rapide n'est pas établie entre le second robinet et le premier robinet et une seconde position lorsque la connexion rapide est établie entre le second robinet et le premier robinet.

L'invention concerne notamment, un dispositif modulaire de fourniture de gaz sous pression comprenant un organe de régulation de fluide tel qu'un robinet nomade qui se raccorde de façon amovible sur une base telle qu'un premier robinet solidaire d'une bouteille de gaz sous pression.

L'invention peut concerner notamment une architecteur telle que décrite par exemple dans le document FR3054290A1 ou FR3054291A1.

Dans les dispositifs connus, l'organe de commande (levier par exemple) peut être déplacé dans sa position active d'ouverture du circuit (de soutirage et/ou de remplissage) même lorsqu'il n'est pas raccordé (c'est-à-dire même lorsqu'il accroché via sa connexion rapide) sur le port à haute pression (premier robinet solidaire de la source de haute pression par exemple).

Par exemple, un pousse clapet peut être activé par le levier même si le robinet qui le porte n'est pas (ou pas correctement) raccordé au robinet avec lequel il doit coopérer. Ceci peut exposer le pousse clapet à des détériorations et même provoquer des accidents. En effet, des risques de fuite ou d'éjection du robinet peuvent se produire en cas de manipulations non autorisées.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que, dans sa première position, la pièce de connexion assure un blocage de l'organe de commande dans sa première position de repos pour empêcher son déplacement vers sa seconde position active et en ce que, dans sa seconde position, la pièce de connexion ne bloque pas l'organe de commande dans sa première position de repos pour autoriser son déplacement vers sa seconde position active.

Par ailleurs, des modes de réalisation de l'invention peuvent comporter l'une ou plusieurs des caractéristiques suivantes :
- le circuit interne du premier robinet s'étend entre une première extrémité amont destinée à être en communication avec une source de fluide sous pression et une extrémité aval, le circuit interne du premier robinet comprenant un clapet d'isolation permettant d'ouvrir ou de fermer le circuit interne, le circuit interne du second robinet comprenant une extrémité amont destinée à être en communication l'extrémité aval du circuit interne du premier robinet lorsque le second robinet est accroché sur le premier robinet et une extrémité aval formant la sortie destinée à être raccordée avec un appareil utilisateur du fluide, le second robinet comprenant un organe mobile d'actionnement du clapet d'isolation du premier robinet pour commander l'ouverture ou la fermeture de ce dernier, le déplacement dudit organe mobile d'actionnement étant commandé par l'organe de commande,
- le premier robinet comprend une extrémité de forme cylindrique s'étendant selon un axe longitudinal, le système de connexion rapide comprenant au moins une gorge ou nervure formée sur l'extrémité cylindrique du premier robinet et un système à griffes ou billes d'accrochage solidaire du second robinet et coopérant avec la au moins une gorge ou nervure formée sur l'extrémité cylindrique du premier robinet,
- le dispositif comporte un organe de verrouillage/déverrouillage de la liaison mécanique des organes d'accrochages du système de connexion rapide, l'organe de verrouillage/déverrouillage étant mobile relativement au second robinet entre une première position de verrouillage et une seconde position de déverrouillage, dans la première position de verrouillage, l'organe de verrouillage/déverrouillage empêchant, lorsque les deux robinets sont accrochés, la séparation du second robinet par rapport au premier robinet, dans la seconde position de déverrouillage l'organe de verrouillage/déverrouillage permettant, lorsque les deux robinets sont accrochés, la séparation du second robinet par rapport au premier robinet, ledit organe de verrouillage/déverrouillage constituant la pièce de connexion configurée pour assurer ou non le blocage de l'organe de commande,
- l'organe de verrouillage/déverrouillage est montée mobile en translation et/ou rotation sur le second robinet,
- le blocage de l'organe de commande par la pièce de connexion est un blocage mécanique et/ou magnétique et/ou pneumatique direct ou via une pièce intermédiaire telle qu'une butée escamotable,
- le blocage de l'organe de commande par la pièce de connexion est un blocage mécanique assuré par une pièce intermédiaire du dispositif coopérant d'une part avec une portion de l'organe de commande et d'autre part avec la pièce de connexion, pour former ou non une butée mécanique pour l'organe de commande selon la position de la pièce de connexion,
- la pièce intermédiaire comprend un pion mobile sollicité par un organe de rappel,
- la pièce intermédiaire comprend un axe solidaire de l'organe de commande et coopérant ou non en butée avec la pièce de connexion selon la position de cette dernière,
- le blocage ou non de l'organe de commande par la pièce de connexion est un blocage mécanique direct entre une extrémité de l'organe de commande avec une portion de la pièce de connexion, pour former ou non une butée mécanique pour l'organe de commande selon la position de la pièce de connexion,
- dans sa seconde position active l'organe de commande assure un blocage de la pièce de connexion dans sa seconde position, pour empêcher la séparation entre le second robinet et le premier robinet, dans sa première position de repos l'organe de commande ne bloque pas la pièce de connexion dans sa second position, pour permettre son déplacement vers sa première position et ainsi autoriser la séparation entre le second robinet et le premier robinet,
- le blocage de la pièce de connexion par l'organe de commande est un blocage mécanique et/ou magnétique et/ou pneumatique direct ou via une pièce intermédiaire telle qu'une butée escamotable,
- le blocage de la pièce de connexion par l'organe de commande est un blocage mécanique assuré par une pièce intermédiaire du dispositif coopérant d'une part avec une portion de l'organe de commande et d'autre part avec la pièce de connexion pour former ou non une butée mécanique pour la pièce de connexion selon la position de l'organe de commande,
- le système de connexion rapide assure un blocage mécanique du second robinet sur le premier robinet au moins selon un axe longitudinal,
- le circuit interne du second robinet comprend une extrémité aval munie d'un raccord de sortie débouchant sur la surface périphérique du second robinet,
- le dispositif comprend une bouteille de fluide sous pression sur laquelle est raccordé le premier robinet,
- le dispositif comprenant en outre un chapeau de protection du premier robinet fixe rigidement a la bouteille,
- en position raccordée du second robinet sur le premier robinet (connexion rapide établie), le système de connexion rapide autorise une rotation du second robinet sur le premier robinet autour de l'axe longitudinal et par rapport au chapeau,
- la pièce de connexion forme une enveloppe extérieure ou bague rapportée sur au moins une partie de la surface extérieure du second robinet,
- la pièce de connexion comprend un manchon tubulaire dispose autour d'au moins une partie du corps du second robinet,
- les organes mobiles d'accrochage comprennent des billes ou griffes, dans sa seconde position l'organe de connexion ne bloque pas le déplacement des organes mobiles d'accrochage et, dans sa première position, l'organe de connexion bloque le déplacement desdits organes mobiles d'accrochage.

L'invention concerne également un ensemble de stockage(s) de fluide sous pression comprenant un dispositif conforme à l'une quelconque des caractéristiques ci-dessus ou ci-dessous.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue en coupe, schématique et partielle, illustrant un exemple de réalisation d'un dispositif de fourniture de fluide dans un état déconnecté ou séparé,
[Fig. 2] représente une vue en coupe, schématique et partielle, illustrant une configurations d'utilisation d'un dispositif de fourniture de fluide dans un état partiellement accroché/connecté (non verrouillé),
[Fig. 3] représente une vue similaire à celle de la [Fig. 2] dans un état accroché/connecté (verrouillé),
[Fig. 4] représente une vue schématique, partiellement en coupe, d'un détail du dispositif illustrant un premier exemple de réalisation d'un système de blocage débrayable de l'organe de commande,
[Fig. 5] représente deux vues schématiques et partielles, de côté d'un détail du système de la [Fig. 4] illustrant respectivement deux exemples possibles de structure de l'organe de commande,
[Fig. 6] représente une vue schématique, partiellement en coupe, d'un détail du dispositif illustrant un deuxième exemple de réalisation d'un système de blocage débrayable de l'organe de commande,
[Fig. 7] représente deux vues schématiques et partielles, de côté, d'un détail du système de la [Fig. 6] illustrant respectivement deux états du système de blocage,
[Fig. 8] représente une vue schématique, partiellement en coupe, d'un détail du dispositif illustrant un troisième exemple de réalisation d'un système de blocage débrayable de l'organe de commande dans un premier état (bloqué),
[Fig. 9] représente une vue similaire à celle de la [Fig. 8] illustrant le troisième exemple de réalisation d'un système de blocage débrayable de l'organe de commande dans un deuxième état (non bloqué),
[Fig. 10] représente une vue schématique, partiellement en coupe, d'un détail du dispositif illustrant un quatrième exemple de réalisation d'un système de blocage débrayable de l'organe de commande dans un premier état (bloqué),
[Fig. 11] représente similaire à celle de la [Fig. 10] illustrant le quatrième exemple de réalisation d'un système de blocage débrayable de l'organe de commande dans un deuxième état (non bloqué),
[Fig. 12] représente une vue schématique, partiellement en coupe, d'un détail du dispositif illustrant un cinquième exemple de réalisation d'un système de blocage débrayable de l'organe de commande dans un premier état (bloqué),
[Fig. 13] représente similaire à celle de la [Fig. 12] illustrant le cinquième exemple de réalisation d'un système de blocage débrayable de l'organe de commande dans un deuxième état (non bloqué).

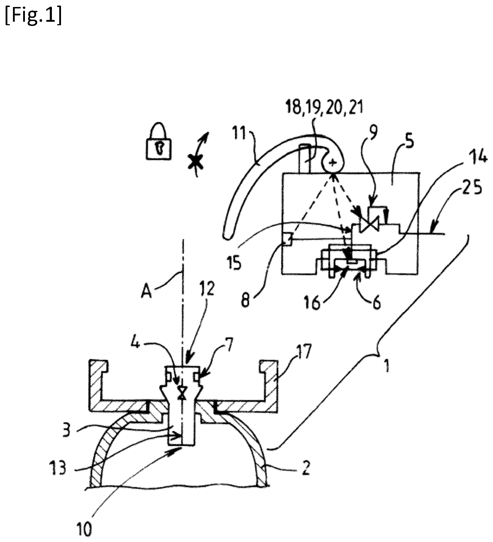

La [Fig. 1] représente un dispositif 1 de fourniture de fluide sous pression, notamment de gaz sous pression, comprenant un premier robinet 3 monté dans l'orifice d'un réservoir 2 et entouré d'un chapeau 17 de protection.

Le premier robinet 3 abrite un circuit 13 interne de fluide muni d'au moins d'un organe 4 d'isolation permettant d'ouvrir ou de fermer le circuit 13 interne. L'organe 4 d'isolement est par exemple un clapet d'isolation.

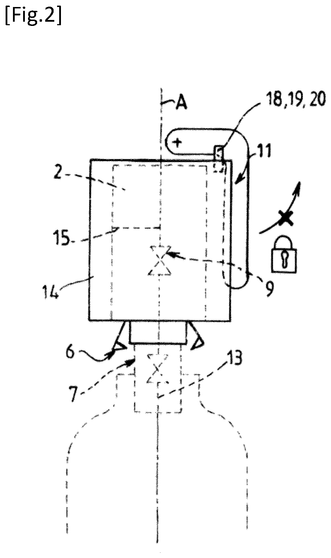

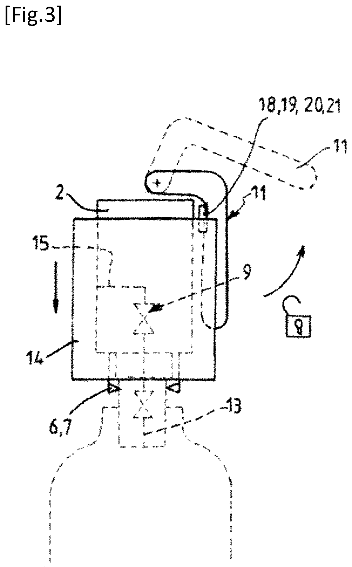

Le dispositif 1 comprend un second robinet 5 formant une entité physique distincte (séparable) du premier robinet 3 (et en position déconnectée à la [Fig. 1] et en position partiellement connectée/accroché à la [Fig. 2] et en position correctement connectée/accroché à la [Fig. 3]).

Le second robinet 5 est muni d'un circuit 15 interne de fluide comprenant une première extrémité amont destinée à venir se raccorder fluidiquement à une extrémité aval 12 du circuit 13 interne du premier 3 robinet. Les deux robinets 3, 5 sont configurés pour mettre en communication leurs circuits internes 13, 15 lorsque le second robinet 5 est correctement accroché sur le premier robinet 3 via le système de connexion rapide.

Le circuit 15 interne du second robinet 5 peut comprendre par exemple au moins un organe 9 de contrôle du flux de fluide (par exemple une vanne et/ou un détendeur fixe ou réglable et/ou un régulateur de débit). Le second 5 robinet comprend de préférence également un organe 16 mobile d'actionnement de l'organe 4 d'isolation du premier robinet 3 pour commander l'ouverture ou la fermeture de ce dernier. Par exemple, l'organe 16 mobile d'actionnement comprend un pousse-clapet mobile dont le déplacement est commandé par un organe 11 de commande manuel porté par le second 5 robinet. L'organe 11 de commande comprend un levier 11 dans cet exemple mais pourrait comprendre un bouton poussoir, un volant ou tout autre organe approprié. Le levier 11 peut commander le cas échéant l'organe 9 de contrôle du flux de fluide.

Le premier 3 robinet et le second 5 robinet comprenant des organes 6, 7 d'accrochages respectifs formant un système de connexion/accrochage rapide mâle/femelle amovible du second robinet 5 sur le premier 3 robinet.

Par exemple, le premier 3 robinet comprend une extrémité terminale de forme cylindrique s'étendant selon un axe A longitudinal central sur laquelle se raccorde le second robinet 5. Le système de connexion rapide peut comprendre au moins une gorge 7 ou nervure formée sur l'extrémité cylindrique du premier robinet 3 et un système a griffes 6, billes (ou tout élément d'accrochage équivalent approprié) solidaire du second robinet 5.

Le ou les éléments 6 d'accrochage du second robinet 5 sont de préférence mobiles et peuvent être verrouillés/déverrouillés par exemple par un organe 14 de verrouillage mobile sur le second robinet 5 (cf. [Fig. 2] et [Fig. 3]). Le ou les éléments 6 d'accrochage du second robinet 5 coopèrent avec le au moins une gorge ou nervure 7 formée sur l'extrémité cylindrique du premier robinet 3.

Le levier 11 est déplaçable entre une première position de repos dans laquelle la circulation de fluide vers la sortie 25 est empêchée (cf. par exemple la position basse du levier 11 de la [Fig. 1] ou la position en traits continus de la [Fig. 2] ou de la [Fig. 3]) et une seconde position active dans laquelle la circulation de fluide vers la sortie 25 est autorisée (cf. position la position relevée en pointillés de [Fig. 3]).

Le système de connexion rapide comprend une pièce 14 de connexion du second robinet 5 sur le premier 3 robinet, par exemple un organe 14 de verrouillage/déverrouillage de la connexion rapide. Cette pièce 14 de connexion est mobile entre une première position lorsque la connexion rapide n'est pas établie entre le second robinet 5 et le premier robinet (cf. [Fig. 1] ou [Fig. 2]) et une seconde position lorsque la connexion rapide est établie entre le second robinet 5 et le premier robinet 3 (cf. [Fig. 3]).

Par exemple, dans le cas où la pièce de connexion est un organe 14 de verrouillage/déverrouillage de la connexion rapide, cet organe 14 de verrouillage/déverrouillage permet ou non, selon la position, le mouvement des organes 6 d'accrochage mobiles (et donc une connexion/déconnexion mécanique). Dans sa seconde position, l'organe 14 de verrouillage/déverrouillage ne permet pas le mouvement des organes 6 d'accrochage mobiles (blocage/verrouillage en position de connexion mécanique).

La pièce 14 de connexion est donc un indicateur entre d'une part une connexion correcte (par exemple verrouillée) et, d'autre part, une absence de connexion ou une connexion incorrect ou incomplète (pas de connexion mécanique ou une connexion incomplète non verrouillée).

Dans sa première position, l'organe 14 de verrouillage/déverrouillage connexion assure un blocage du levier 11 de commande dans sa première position de repos, pour empêcher son déplacement vers sa seconde position active (cf. [Fig. 1] ou [Fig. 2] où ce verrouillage est symbolisé par un cadenas fermé et une flèche de rotation du levier barrée).

Dans sa seconde position, l'organe 14 de verrouillage/déverrouillage ne bloque pas le levier 11 de commande dans sa première position de repos pour autoriser son déplacement vers sa seconde position active (cf. [Fig. 3] où ce déverrouillage est symbolisé par un cadenas ouvert et une flèche de rotation du levier non barrée).

C'est-à-dire que si l'organe 14 de verrouillage/déverrouillage n'est pas dans une position qui correspond à un accrochage correct et verrouillé des deux robinets 3, 5, cet organe 14 de verrouillage interdit directement ou indirectement au levier 11 de pouvoir passer de vers sa position active (rotation bloquée par exemple).

Comme illustré, l'organe 14 de verrouillage/déverrouillage de la liaison mécanique des organes 6, 7 d'accrochages du système de connexion rapide peut comprendre un manchon ou une bague mobile en translation sur le second robinet 5. Cet organe 14 de verrouillage est par exemple mobile entre une première position de déverrouillage (position haute cf. [Fig. 2] ou [Fig. 1]) et une seconde position de verrouillage (position basse cf. [Fig. 3]).

Dans la première position, l'organe 14 de verrouillage/déverrouillage permet par exemple le débattement/déplacement des organes d'accrochage 6 mobiles (second robinet 5 séparé ou séparable du premier robinet 3.

Dans la seconde position de verrouillage, l'organe 14 de verrouillage/déverrouillage empêche par exemple le débattement/déplacement des organes d'accrochage 6 mobiles (second robinet 5 accroché correctement de façon complète sur le premier robinet 3).

Le blocage du levier 11 de commande par l'organe de verrouillage/déverrouillage 14 est de préférence un blocage mécanique direct ou via une pièce intermédiaire telle qu'une butée escamotable (cf. les références 18, 19, 20, 21 aux figures). Bien entendu ce blocage pourrait être également ou alternativement magnétique et/ou pneumatique par exemple.

Comme schématisé notamment aux [Fig. 2] et [Fig. 3], le blocage du levier 11 par l'organe 14 de de verrouillage/déverrouillage est un blocage mécanique assuré par une pièce intermédiaire 18, 19, 21 du dispositif ayant une extrémité coopérant avec une portion du levier 11 et une extrémité coopérant avec l'organe 14 de verrouillage/déverrouillage. La pièce intermédiaire 18, 19, 21 formant ou non une butée mécanique pour le levier 11 selon la position de l'organe 14 de verrouillage/déverrouillage.

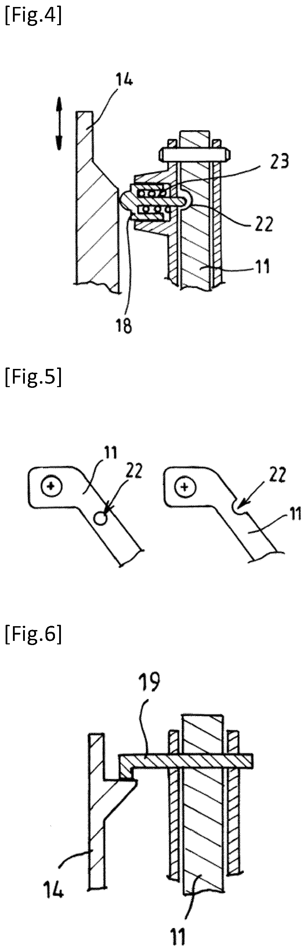

Dans l'exemple des [Fig. 4] et [Fig. 5], l'organe 14 de verrouillage/déverrouillage est muni d'une zone profilée (en pente de type came par exemple) qui renvoie en translation un pion 18 mobile (ou goupille épaulée) de verrouillage du levier 11. En position non verrouillée ou déconnectée (organe 14 de verrouillage/déverrouillage dans sa première position, par exemple haute), la zone profilée vient pousser le pion 18 contre l'effort d'un ressort de rappel. Une extrémité du pion 18 se loge dans une cavité 22 ou logement. Le pion 18 interdit alors la rotation du levier 11 vers sa seconde position active. L'ensemble de ce mécanisme peut être logé dans le corps principal du dispositif.

Lorsqu'en revanche le raccordement est correct et complet (organe 14 de verrouillage/déverrouillage dans sa seconde position, par exemple position basse), l'extrémité du pion 18 (rappelée par son ressort) se trouve en bas de la pente. L'extrémité du pion sort de la cavité ou du logement dédié dans le levier 11. Ceci autorise la rotation du levier vers sa position active.

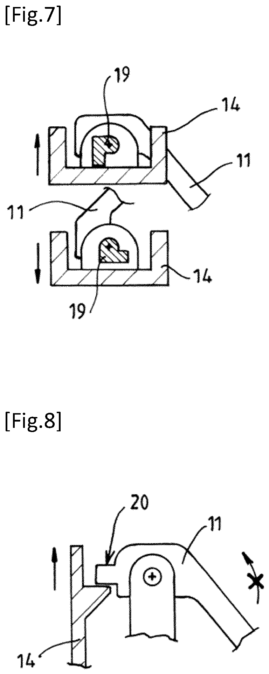

Dans l'exemple des [Fig. 6] et [Fig. 7], l'organe 14 de verrouillage/déverrouillage peut être muni d'une forme ou excroissance (telle qu'un rebord ou une butée). Une extrémité de l'axe de rotation du levier 11 (ou directement le levier 11) est munie elle aussi d'une forme ou excroissance (telle qu'une palette, un bossage, un carré, un méplat ou tout autre forme appropriée).

En position déconnectée (organe 14 de verrouillage/déverrouillage dans sa première position, par exemple en position haute), l'excroissance de l'organe 14 de verrouillage/déverrouillage est positionnée de façon à venir en butée avec l'excroissance de l'axe du levier 11 (cf. partie haute de la [Fig. 7]). Ceci interdit la rotation du levier 11 vers sa position active.

En position connectée (organe 14 de verrouillage/déverrouillage dans sa deuxième position, par exemple en position basse), l'excroissance de l'organe 14 de verrouillage/déverrouillage se décale aussi vers le bas et libère l'excroissance de l'axe du levier 11 (cf. partie basse de la [Fig. 7]). Ceci permet la rotation du levier 11.

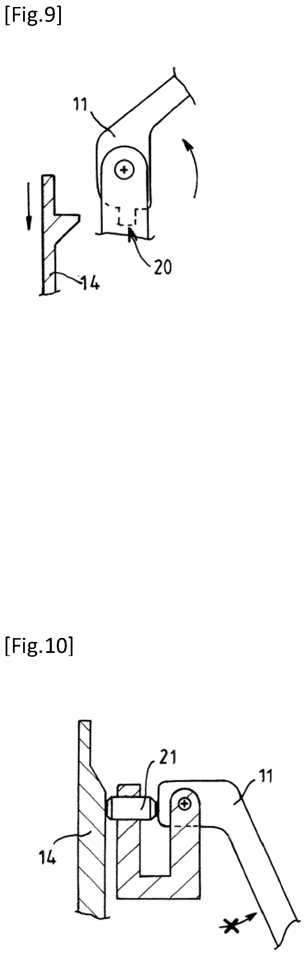

Dans l'exemple des [Fig. 8] et [Fig. 9], l'organe 14 de verrouillage/déverrouillage est muni d'une forme ou excroissance (butée) destinée à coopérer ou non avec une excroissance formée sur came solidaire du levier 11 (palette et/ou bossage et/ou carré et/ou méplat, etc..).

En position déconnectée (organe 14 de verrouillage/déverrouillage dans sa première position, par exemple haute), l'excroissance de l'organe 14 de verrouillage/déverrouillage est en butée contre l'excroissance de la came du levier 11. Ceci interdit la rotation du levier 11.

En position connecté et verrouillée (organe 14 de verrouillage/déverrouillage dans sa seconde position, par exemple basse), l'excroissance de l'organe 14 de verrouillage/déverrouillage se décale aussi vers le bas et libère l'excroissance du levier 11. Ceci autorise la rotation du levier 11.

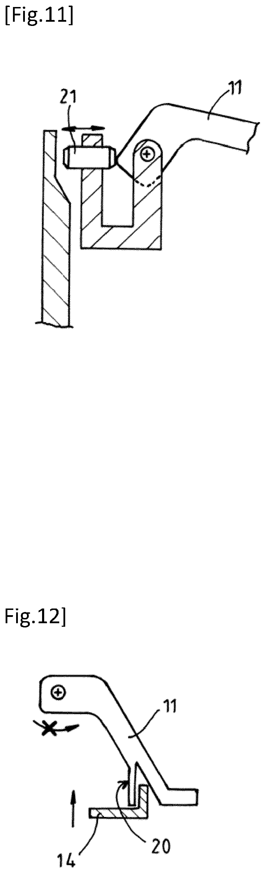

Dans l'exemple des [Fig. 10] et [Fig. 11], l'organe 14 de verrouillage/déverrouillage est muni d'une zone profilée, par exemple en pente (de type came par exemple). En position déconnectée (organe 14 de verrouillage/déverrouillage dans sa première position, par exemple haute), cette zone profilée vient pousser et maintenir en appui, une goupille 21 libre en translation contre une des faces de la came du levier 11. Ceci interdit la rotation du levier 11 vers sa seconde position active.

En position connectée et verrouillée (organe 14 de verrouillage/déverrouillage dans sa seconde position, par exemple basse), l'extrémité de la goupille 21 se trouve en bas de la pente de la zone profilée et donc libre en translation. L'autre extrémité de la goupille 21 n'est plus en butée avec la face de la came du levier 11. Ceci autorise la rotation du levier 11.

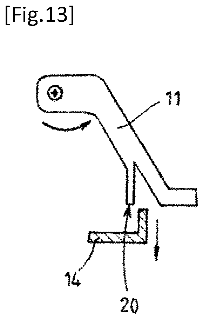

Dans l'exemple des [Fig. 12] et [Fig. 13], l'organe 14 de verrouillage/déverrouillage est muni d'une forme ou excroissance (type crochet par exemple) destinée à coopérer ou non avec une portion 20 du levier 11 (lui aussi ayant par exemple une forme conjuguée ou une excroissance).

En position déconnectée (organe 14 de verrouillage/déverrouillage dans sa première position, par exemple haute), cf. [Fig. 12]), l'excroissance de l'organe 14 de verrouillage/déverrouillage est positionnée en butée ou interférence avec l'excroissance 20 du levier 11. Ceci bloque la rotation du levier 11.

En position connectée et verrouillée (organe 14 de verrouillage/déverrouillage dans sa seconde position, par exemple basse cf. [Fig. 13]), l'excroissance de l'organe 14 de verrouillage/déverrouillage se décale et libère l'excroissance 20 du levier, autorisant la rotation du levier 11).

Dans les exemples décrits ci-dessus la pièce 14 de connexion qui bloque ou ne bloque pas le levier 11 est un organe 14 de verrouillage de la connexion rapide. Bien entendu, d'autres variantes de réalisation sont possibles et notamment cette fonction de blocage du levier 11 lorsque le second robinet 5 n'est pas correctement accroché sur le premier robinet 3 pourrait être assurée de la même façon (directement ou indirectement) par une autre pièce mobile du système de connexion rapide (par exemple par une griffe ou crochet ou bille ou pièce intermédiaire de transmission de mouvement de la connexion rapide).

De même, ledit mécanisme de blocage du levier 11 pourrait être configuré pour interdire la séparation des deux robinets 3, 5 (par exemple via interdiction de déplacement de l'organe 14 de verrouillage/déverrouillage vers sa première position de déverrouillage) tant que le levier 11 n'est pas dans sa première position de repos.

En variante ou en combinaison avec ce qui précède, c'est-à-dire indépendamment ou en plus de ce qui précède, le système de raccordement mâle/femelle peut avantageusement posséder des éléments mécaniques conçus en matériaux compatibles avec les efforts auxquels ils sont soumis.

Par exemple, les éléments devant résister à la pression ou assurant le maintien en position (ex: griffes, billes, crochets, axes, ressorts...) sont en matériau métallique et les éléments de guide ou de préhension pas ou peu sollicités mécaniquement sont en matériau plastique.

Chaque pièce et notamment le bâti ou l'organe de verrouillage/déverrouillage peut être divisée en fonction des fonctions attendues:
- en éléments métalliques pour les zones sollicitées constamment par la pression,
- en éléments plastiques pour les zones de guidage.

La multiplicité des matériaux permet d'assurer la résistance et une légèreté relative.

La pièce 14 de connexion (organe 14 de verrouillage/déverrouillage, par exemple une bague) peut être munie d'une forme ou excroissance (type crochet). Une zone de l'organe de commande (levier notamment) peut être munie elle aussi d'une forme ou excroissance. En position déconnectée (bague 14 en position haute), l'excroissance de la bague est positionnée de façon à ce que l'excroissance du levier vienne se coupler, interdisant la rotation du levier en position active. En position connecté (bague en position basse), l'excroissance de la bague se décale aussi vers le bas et libère l'excroissance du levier, autorisant la rotation du levier en position active.

## Revendications

1. Dispositif de fourniture de fluide sous pression, notamment de gaz sous pression, comprenant un premier robinet (3) abritant un circuit (13) interne de fluide, le dispositif (1) comportant un second robinet (5) comprenant un circuit (15) interne, le second robinet (5) formant une entité physique distincte du premier robinet (3), le premier (3) robinet et le second (5) robinet comprenant des organes (6, 7) d'accrochages respectifs formant un système de connexion rapide mâle/femelle amovible du second robinet (5) sur le premier (3) robinet, les circuits (13, 15) internes comprenant un ensemble de vanne(s) (4, 9) pour autoriser ou empêcher la circulation du fluide vers une sortie (25) du dispositif lorsque le second robinet (5) est accroché sur le premier robinet (3) via le système de connexion rapide, le dispositif (1) comprenant au moins un organe (11) de commande mobile actionnable manuellement pour commander l'ensemble de vanne(s), l'organe (11) de commande étant mobile entre une première position de repos dans laquelle la circulation de fluide vers la sortie (25) est empêchée et une seconde position active dans laquelle la circulation de fluide vers la sortie (25) est autorisée, le système de connexion rapide comprenant une pièce (14) de connexion du second robinet (5) sur le premier (3) robinet, la pièce (14) de connexion étant mobile entre une première position lorsque la connexion rapide n'est pas établie entre le second robinet (5) et le premier (3) robinet et une seconde position lorsque la connexion rapide est établie entre le second robinet (5) et le premier robinet (3), et, dans sa première position, la pièce (14) de connexion assurant un blocage de l'organe (11) de commande dans sa première position de repos pour empêcher son déplacement vers sa seconde position active et, dans sa seconde position, la pièce (14) de connexion ne bloquant pas l'organe (11) de commande dans sa première position de repos pour autoriser son déplacement vers sa seconde position active, **caractérisé en ce que**, dans sa seconde position active l'organe (11) de commande assure un blocage de la pièce (14) de connexion dans sa second position, pour empêcher la séparation entre le second robinet (5) et le premier (3) robinet, et **en ce que** dans sa première position de repos l'organe (11) de commande ne bloque pas la pièce de connexion (14) dans sa second position, pour permettre son déplacement vers sa première position et ainsi autoriser la séparation entre le second robinet (5) et le premier (3) robinet.

2. Dispositif selon la revendication 1, **caractérisé en ce que** le circuit (13) interne du premier robinet (3) s'étend entre une première extrémité (10) amont destinée à être en communication avec une source (2) de fluide sous pression et une extrémité aval (12), le circuit (13) interne du premier robinet (3) comprenant un clapet (4) d'isolation permettant d'ouvrir ou de fermer le circuit (13) interne, le circuit (15) interne du second robinet (5) comprenant une extrémité amont destinée à être en communication l'extrémité aval (12) du circuit interne (13) du premier robinet (3) lorsque le second robinet (5) est accroché sur le premier robinet (3) et une extrémité aval (25) formant la sortie destinée à être raccordée avec un appareil utilisateur du fluide, le second robinet (5) comprenant un organe (16) mobile d'actionnement du clapet (4) d'isolation du premier robinet (3) pour commander l'ouverture ou la fermeture de ce dernier, le déplacement dudit organe (16) mobile d'actionnement étant commandé par l'organe (11) de commande.

3. Dispositif selon l'une quelconque des revendications 1 à 2 **caractérisé en ce que** le premier (3) robinet comprend une extrémité de forme cylindrique s'étendant selon un axe (A) longitudinal, le système de connexion rapide comprenant au moins une gorge ou nervure (7) formée sur l'extrémité cylindrique du premier robinet (3) et un système à griffes (6) ou billes d'accrochage solidaire du second robinet (5) et coopérant avec la au moins une gorge ou nervure (7) formée sur l'extrémité cylindrique du premier robinet (3).

4. Dispositif selon l'une quelconque des revendications 1 à 3, **caractérisé en ce qu'**il comporte un organe (14) de verrouillage/déverrouillage de la liaison mécanique des organes (6, 7) d'accrochages du système de connexion rapide, l'organe (14) de verrouillage/déverrouillage étant mobile relativement au second robinet (5) entre une première position de verrouillage et une seconde position de déverrouillage, dans la première position de verrouillage, l'organe (14) de verrouillage/déverrouillage empêchant, lorsque les deux robinets (3, 5) sont accrochés, la séparation du second (5) robinet par rapport au premier robinet, dans la seconde position de déverrouillage l'organe (14) de verrouillage/déverrouillage permettant, lorsque les deux robinets (3, 5) sont accrochés, la séparation du second (5) robinet par rapport au premier robinet (3), ledit organe (14) de verrouillage/déverrouillage constituant la pièce de connexion configurée pour assurer ou non le blocage de l'organe (11) de commande.

5. Dispositif selon la revendication 4, **caractérisé en ce que** l'organe (14) de verrouillage/déverrouillage est montée mobile en translation et/ou rotation sur le second robinet (5) .

6. Dispositif selon l'une quelconque des revendications 1 à 5 **caractérisé en ce que** l'organe (11) de commande comprend un levier pivotant et/ou un bouton mobile en translation et/ou un volant rotatif.

7. Dispositif selon l'une quelconque des revendications 1 à 6 **caractérisé en ce que** le blocage de l'organe (11) de commande par la pièce (14) de connexion est un blocage mécanique et/ou magnétique et/ou pneumatique direct ou via une pièce intermédiaire (18, 19, 20, 21) telle qu'une butée escamotable.

8. Dispositif selon la revendication 7, **caractérisé en ce que** le blocage de l'organe (11) de commande par la pièce (14) de connexion est un blocage mécanique assuré par une pièce intermédiaire (18, 19, 21) du dispositif coopérant d'une part avec une portion (22) de l'organe (11) de commande et d'autre part avec la pièce (14) de connexion, pour former ou non une butée mécanique pour l'organe (11) de commande selon la position de la pièce (14) de connexion.

9. Dispositif selon la revendication 8, **caractérisé en ce que** la pièce intermédiaire (18) comprend un pion mobile sollicité par un organe (23) de rappel.

10. Dispositif selon la revendication 8 ou 9, **caractérisé en ce que** la pièce intermédiaire (18, 19) comprend un axe solidaire de l'organe (11) de commande et coopérant ou non en butée avec la pièce (14) de connexion selon la position de cette dernière.

11. Dispositif selon l'une quelconque des revendications 8 à 10, **caractérisé en ce que** le blocage ou non de l'organe (11) de commande par la pièce (14) de connexion est un blocage mécanique direct entre une extrémité (20) de l'organe (11) de commande avec une portion de la pièce (14) de connexion, pour former ou non une butée mécanique pour l'organe (11) de commande selon la position de la pièce (14) de connexion.

12. Dispositif selon l'une quelconque des revendications 1 à 11, **caractérisé en ce que** le blocage de la pièce (14) de connexion par l'organe (11) de commande est un blocage mécanique et/ou magnétique et/ou pneumatique direct ou via une pièce intermédiaire (19, 20, 21) telle qu'une butée escamotable.

13. Dispositif selon l'une quelconque des revendications 1 à 12, **caractérisé en ce que** le blocage de la pièce (14) de connexion par l'organe (11) de commande est un blocage mécanique assuré par une pièce intermédiaire (19, 21) du dispositif coopérant d'une part avec une portion de l'organe (11) de commande et d'autre part avec la pièce de connexion (14) pour former ou non une butée mécanique pour la pièce de connexion selon la position de l'organe (11) de commande.

14. Ensemble de stockage(s) de fluide sous pression comprenant un dispositif conforme à l'une quelconque des revendications 1 à 13.

## Patentansprüche

1. Vorrichtung zur Abgabe von unter Druck stehendem Fluid, insbesondere von unter Druck stehendem Gas, umfassend einen ersten Hahn (3), der einen internen Fluidkreis (13) enthält, wobei die Vorrichtung (1) einen zweiten Hahn (5) aufweist, der einen internen Kreis (15) umfasst, wobei der zweite Hahn (5) eine vom ersten Hahn (3) physisch getrennte Einheit bildet, wobei der erste (3) Hahn und der zweite (5) Hahn jeweilige Kupplungselemente (6, 7) umfassen, die ein lösbares Männchen/Weibchen-Schnellanschlusssystem zum Anschließen des zweiten Hahns (5) an den ersten (3) Hahn bilden, wobei die internen Kreise (13, 15) eine Anordnung aus einem oder mehreren Ventil (en) (4, 9) umfassen, um die Zirkulation des Fluids zu einem Auslass (25) der Vorrichtung zuzulassen oder zu verhindern, wenn der zweite Hahn (5) über das Schnellanschlusssystem an den ersten Hahn (3) gekuppelt ist, wobei die Vorrichtung (1) mindestens ein manuell betätigbares mobiles Steuerelement (11) umfasst, um die Anordnung aus einem oder mehreren Ventil(en) zu steuern, wobei das Steuerelement (11) zwischen einer ersten Ruhestellung, in der die Zirkulation von Fluid zum Auslass (25) verhindert wird, und einer zweiten aktiven Stellung, in der die Zirkulation von Fluid zum Auslass (25) zugelassen wird, beweglich ist, wobei das Schnellanschlusssystem ein Anschlussstück (14) zum Anschließen des zweiten Hahns (5) an den ersten (3) Hahn umfasst, wobei das Anschlussstück (14) zwischen einer ersten Stellung, wenn der Schnellanschluss zwischen dem zweiten Hahn (5) und dem ersten (3) Hahn nicht eingerichtet ist, und einer zweiten Stellung, wenn der Schnellanschluss zwischen dem zweiten Hahn (5) und dem ersten Hahn (3) eingerichtet ist, beweglich ist, und wobei das Anschlussstück (14) in seiner ersten Stellung ein Sichern des Steuerelements (11) in seiner ersten Ruhestellung gewährleistet, um seine Verlagerung zu seiner zweiten aktiven Stellung hin zu verhindern, wobei das Anschlussstück (14) in seiner zweiten Stellung das Steuerelement (11) nicht in seiner ersten Ruhestellung sichert, um seine Verlagerung zu seiner zweiten aktiven Stellung hin zuzulassen, **dadurch gekennzeichnet, dass** das Steuerelement (11) in seiner zweiten aktiven Stellung ein Sichern des Anschlussstücks (14) in seiner zweiten Stellung gewährleistet, um die Trennung zwischen dem zweiten Hahn (5) und dem ersten (3) Hahn zu verhindern, und dass das Steuerelement (11) in seiner ersten Ruhestellung das Anschlussstück (14) nicht in seiner zweiten Stellung sichert, um seine Verlagerung zu seiner ersten Stellung hin zu erlauben und somit die Trennung zwischen dem zweiten Hahn (5) und dem ersten (3) Hahn zuzulassen.

2. Vorrichtung nach Anspruch 1, **dadurch gekennzeichnet, dass** sich der interne Kreis (13) des ersten Hahns (3) zwischen einem ersten stromaufwärtigen Ende (10), das dazu bestimmt ist, mit einer Quelle (2) für unter Druck stehendes Fluid in Verbindung zu stehen, und einem stromabwärtigen Ende (12) erstreckt, wobei der interne Kreis (13) des ersten Hahns (3) ein Absperrventil (4) umfasst, das es ermöglicht, den internen Kreis (13) zu öffnen oder zu schließen, wobei der interne Kreis (15) des zweiten Hahns (5) ein stromaufwärtiges Ende, das dazu bestimmt ist, mit dem stromabwärtigen Ende (12) des internen Kreises (13) des ersten Hahns (3) in Verbindung zu stehen, wenn der zweite Hahn (5) auf dem ersten Hahn (3) gekuppelt ist, und ein stromabwärtiges Ende (25) umfasst, das den Auslass bildet, der dazu bestimmt ist, mit einem Fluidverbrauchergerät verbunden zu werden, wobei der zweite Hahn (5) ein bewegliches Betätigungselement (16) für das Absperrventil (4) des ersten Hahns (3) umfasst, um das Öffnen oder Schließen von Letzterem zu steuern, wobei die Verlagerung des beweglichen Betätigungselements (16) durch das Steuerelement (11) gesteuert wird.

3. Vorrichtung nach einem der Ansprüche 1 bis 2, **dadurch gekennzeichnet, dass** der erste (3) Hahn ein Ende von zylindrischer Form umfasst, das sich entlang einer Längsachse (A) erstreckt, wobei das Schnellanschlusssystem mindestens eine Rille oder Nut (7) umfasst, die am zylindrischen Ende des ersten Hahns (3) gebildet ist, und ein Andocksystem mit Klauen (6) oder Kugeln, das fest mit dem zweiten Hahn (5) verbunden ist und mit der mindestens einen Rille oder Nut (7), die am zylindrischen Ende des ersten Hahns (3) gebildet ist, zusammenwirkt.

4. Vorrichtung nach einem der Ansprüche 1 bis 3, **dadurch gekennzeichnet, dass** es ein Verriegelungs-/Entriegelungselement (14) für die mechanische Verbindung der Kupplungselemente (6, 7) des Schnellanschlusssystems aufweist, wobei das Verriegelungs-/Entriegelungselement (14) relativ zu dem zweiten Hahn (5) zwischen einer ersten Verriegelungsstellung und einer zweiten Entriegelungsstellung beweglich ist, wobei das Verriegelungs-/Entriegelungselement (14) in der ersten Verriegelungsstellung, wenn die beiden Hähne (3, 5) gekuppelt sind, das Trennen des zweiten (5) Hahns in Bezug auf den ersten Hahn verhindert, wobei das Verriegelungs-/Entriegelungselement (14) in der zweiten Entriegelungsstellung, wenn die beiden Hähne (3, 5) gekuppelt sind, das Trennen des zweiten (5) Hahns in Bezug auf den ersten Hahn (3) erlaubt, wobei das Verriegelungs-/Entriegelungselement (14) das Anschlussstück darstellt, das dazu ausgestaltet ist, das Sichern des Steuerelements (11) zu gewährleisten oder nicht.

5. Vorrichtung nach Anspruch 4, **dadurch gekennzeichnet, dass** das Verriegelungs-/Entriegelungselement (14) translatorisch und/oder rotatorisch beweglich am zweiten Hahn (5) montiert ist.

6. Vorrichtung nach einem der Ansprüche 1 bis 5, **dadurch gekennzeichnet, dass** das Steuerelement (11) einen schwenkbaren Hebel und/oder einen translatorisch beweglichen Knopf und/oder ein drehbares Rad umfasst.

7. Vorrichtung nach einem der Ansprüche 1 bis 6, **dadurch gekennzeichnet, dass** die Sicherung des Steuerelements (11) durch das Anschlussstück (14) eine mechanische und/oder magnetische und/oder pneumatische Sicherung, direkt oder über ein Zwischenstück (18, 19, 20, 21) wie einen einziehbaren Anschlag, ist.

8. Vorrichtung nach Anspruch 7, **dadurch gekennzeichnet, dass** die Sicherung des Steuerelements (11) durch das Anschlussstück (14) eine mechanische Sicherung ist, die durch ein Zwischenstück (18, 19, 21) der Vorrichtung gewährleistet wird, das zum einen mit einem Abschnitt (22) des Steuerelements (11) und zum anderen mit dem Anschlussstück (14) zusammenwirkt, um je nach Stellung des Anschlussstücks (14) einen mechanischen Anschlag für das Steuerelement (11) zu bilden oder nicht.

9. Vorrichtung nach Anspruch 8, **dadurch gekennzeichnet, dass** das Zwischenstück (18) einen beweglichen Stift umfasst, der durch ein Rückstellelement (23) beansprucht wird.

10. Vorrichtung nach Anspruch 8 oder 9, **dadurch gekennzeichnet, dass** das Zwischenstück (18, 19) eine Achse umfasst, die fest mit dem Steuerelement (11) verbunden ist und mit dem Anschlussstück (14) je nach dessen Stellung auf Anschlag zusammenwirkt oder nicht.

11. Vorrichtung nach einem der Ansprüche 8 bis 10, **dadurch gekennzeichnet, dass** die Sicherung oder nicht des Steuerelements (11) durch das Anschlussstück (14) eine direkte mechanische Sicherung zwischen einem Ende (20) des Steuerelements (11) mit einem Abschnitt des Anschlussstücks (14) ist, um je nach Stellung des Anschlussstücks (14) einen mechanischen Anschlag für das Steuerelement (11) zu bilden oder nicht.

12. Vorrichtung nach einem der Ansprüche 1 bis 11, **dadurch gekennzeichnet, dass** die Sicherung des Anschlussstücks (14) durch das Steuerelement (11) eine mechanische und/oder magnetische und/oder pneumatische Sicherung, direkt oder über ein Zwischenstück (19, 20, 21) wie einen einziehbaren Anschlag, ist.

13. Vorrichtung nach einem der Ansprüche 1 bis 12, **dadurch gekennzeichnet, dass** die Sicherung des Anschlussstücks (14) durch das Steuerelement (11) eine mechanische Sicherung ist, die durch ein Zwischenstück (19, 21) der Vorrichtung gewährleistet wird, das zum einen mit einem Abschnitt des Steuerelements (11) und zum anderen mit dem Anschlussstück (14) zusammenwirkt, um je nach Stellung des Steuerelements (11) einen mechanischen Anschlag für das Anschlussstück zu bilden oder nicht.

14. Anordnung zum Speichern von unter Druck stehendem Fluid, die eine Vorrichtung nach einem der Ansprüche 1 bis 13 umfasst.

## Claims

1. Device for supplying pressurized fluid, in particular pressurized gas, comprising a first valve (3) accommodating an internal fluid circuit (13), the device (1) having a second valve (5) comprising an internal circuit (15), the second valve (5) forming a separate physical entity from the first valve (3), the first valve (3) and the second valve (5) comprising respective coupling members (6, 7) that form a male/female quick-connection system for removably connecting the second valve (5) to the first valve (3), the internal circuits (13, 15) comprising a set of control valves (4, 9) for allowing or preventing the flow of the fluid towards an outlet (25) of the device when the second valve (5) is coupled to the first valve (3) via the quick-connection system, the device (1) comprising at least one manually actuable movable control member (11) for controlling the set of control valves, the control member (11) being movable between a first, rest position, in which the flow of fluid towards the outlet (25) is prevented, and a second, active position, in which the flow of fluid towards the outlet (25) is allowed, the quick-connection system comprising a connection piece (14) for connecting the second valve (5) to the first valve (3), the connection piece (14) being movable between a first position, in which the quick connection between the second valve (5) and the first valve (3) has not been established, and a second position, in which the quick connection between the second valve (5) and the first valve (3) has been established, and, in its first position, the connection piece (14) blocking the control member (11) in its first, rest position so as to prevent it from moving towards its second, active position, and, in its second position, the connection piece (14) not blocking the control member (11) in its first, rest position so as to allow it to move towards its second, active position, **characterized in that**, in its second, active position, the control member (11) blocks the connection piece (14) in its second position, so as to prevent the second valve (5) and the first valve (3) from being separated, and **in that**, in its first, rest position, the control member (11) does not block the connection piece (14) in its second position, so as to allow it to move towards its first position and thus allow the second valve (5) and the first valve (3) to be separated.

2. Device according to Claim 1, **characterized in that** the internal circuit (13) of the first valve (3) extends between a first, upstream end (10) intended to be in communication with a source (2) of pressurized fluid and a downstream end (12), the internal circuit (13) of the first valve (3) comprising an isolation valve (4) for opening or closing the internal circuit (13), the internal circuit (15) of the second valve (5) comprising an upstream end intended to be in communication with the downstream end (12) of the internal circuit (13) of the first valve (3) when the second valve (5) is coupled to the first valve (3) and a downstream end (25) forming the outlet that is intended to be connected to an apparatus that uses the fluid, the second valve (5) comprising a movable member (16) for actuating the isolation valve (4) of the first valve (3) in order to open or close the latter, the movement of said movable actuating member (16) being controlled by the control member (11).

3. Device according to either one of Claims 1 and 2, **characterized in that** the first valve (3) comprises a cylindrical end extending along a longitudinal axis (A), the quick-connection system comprising at least one groove or rib (7) formed on the cylindrical end of the first valve (3) and a system of coupling balls or claws (6) that is secured to the second valve (5) and cooperates with the at least one groove or rib (7) formed on the cylindrical end of the first valve (3).

4. Device according to any one of Claims 1 to 3, **characterized in that** it has a member (14) for locking/unlocking the mechanical connection of the coupling members (6, 7) of the quick-connection system, the locking/unlocking member (14) being movable relative to the second valve (5) between a first, locking position and a second, unlocking position, wherein in the first, locking position, when the two valves (3, 5) are coupled, the locking/unlocking member (14) prevents the separation of the second valve (5) from the first valve, and in the second, unlocking position, when the two valves (3, 5) are coupled, the locking/unlocking member (14) allows the separation of the second valve (5) from the first valve (3), said locking/unlocking member (14) constituting the connection piece configured to ensure or prevent the blocking of the control member (11).

5. Device according to Claim 4, **characterized in that** the locking/unlocking member (14) is mounted on the second valve (5) so as to be movable in translation and/or rotation.

6. Device according to any one of Claims 1 to 5, **characterized in that** the control member (11) comprises a pivotable lever and/or a button that is movable in translation and/or a rotary handwheel.

7. Device according to any one of Claims 1 to 6, **characterized in that** the blocking of the control member (11) by the connection piece (14) is mechanical and/or magnetic and/or pneumatic blocking that is direct or via an intermediate piece (18, 19, 20, 21) such as a retractable end stop.

8. Device according to Claim 7, **characterized in that** the blocking of the control member (11) by the connection piece (14) is mechanical blocking brought about by an intermediate piece (18, 19, 21) of the device that cooperates on one side with a portion (22) of the control member (11) and on the other side with the connection piece (14), so as to form or not to form a mechanical end stop for the control member (11) depending on the position of the connection piece (14).

9. Device according to Claim 8, **characterized in that** the intermediate piece (18) comprises a movable pin that is acted on by a return member (23).

10. Device according to Claim 8 or 9, **characterized in that** the intermediate piece (18, 19) comprises a stem that is secured to the control member (11) and cooperates or does not cooperate by abutment with the connection piece (14) depending on the position of the latter.

11. Device according to any one of Claims 8 to 10, **characterized in that** the blocking, or not, of the control member (11) by the connection piece (14) is direct mechanical blocking between one end (20) of the control member (11) and a portion of the connection piece (14), so as to form or not to form a mechanical end stop for the control member (11) depending on the position of the connection piece (14).

12. Device according to any one of Claims 1 to 11, **characterized in that** the blocking of the connection piece (14) by the control member (11) is mechanical and/or magnetic and/or pneumatic blocking that is direct or via an intermediate piece (19, 20, 21) such as a retractable end stop.

13. Device according to any one of Claims 1 to 12, **characterized in that** the blocking of the connection piece (14) by the control member (11) is mechanical blocking brought about by an intermediate piece (19, 21) of the device that cooperates on one side with a portion of the control member (11) and on the other side with the connection piece (14), so as to form or not to form a mechanical end stop for the connection piece depending on the position of the control member (11) .

14. Assembly for storing pressurized fluid, comprising a device according to any one of Claims 1 to 13.
